# EUROPEAN PATENT APPLICATION

(11) **EP 1 288 116 A2**
(43) Date of publication of application: **05.03.2003**
(21) Application number: 02017256.5
(22) Date of filing: 01.08.2002
(51) Int. Cl.: B62K 27/12, B62K 7/00

(54) **Device for pulling a stroller by means of a bicycle**

(30) Priority: 10.08.2001 IT TO20010808
(71) Applicant: Borelli Riccardo, 10029 Villastellone (TO) (IT)
(72) Inventor: Borelli Riccardo, 10029 Villastellone (TO) (IT)
(74) Representative: Robba, Pierpaolo

(57) **Abstract**

The device essentially comprises a pulling bar (4) formed by a pair of L-shaped members (4a, 4b) or of curved members (4'). The bar is connected, at a front end, with means (5) for fastening to the frame (6) of the bicycle (3), so as to allow rotation of the bar (4) about a substantially vertical axis, and is equipped, at the rear end, with means (8) for fastening to the frame (9) of the stroller (2), near the front wheels (10a).

## Description

The present invention concerns a device for pulling a stroller by means of a bicycle.

A solution commonly employed to carry children on a bicycle is using a small chair secured to the bicycle frame, for instance to the crossbar. Yet the presence of the child may disturb the cyclist, by limiting his/her dynamic movements (pushing on the pedals, driving the cycle, and so on).

According to the invention a device is instead provided allowing carrying a child while in the stroller.

The device essentially comprises a pulling bar that is connected, at a front end, to means for fastening to the bicycle frame in such a manner as to allow the bar rotation about a substantial vertical axis, and is equipped, at its rear end, with means for fastening to the stroller frame, near the front wheels.

The device is so constructed that it allows pulling the stroller with its front wheels lifted from the ground.

The invention will become more apparent with reference to the accompanying drawings, in which:
- Fig. 1 is a side view of the device according to the invention, mounted between a bicycle and a stroller;
- Fig. 2 is a top view of the device;
- Fig. 3 is a side view of a detail of the means for fastening to the stroller;
- Figs. 4 and 5 are a side view and a top view, respectively, of a first variant;
- Figs. 6a and 6b are a perspective view and an enlarged view, respectively, of a detail of a second variant.

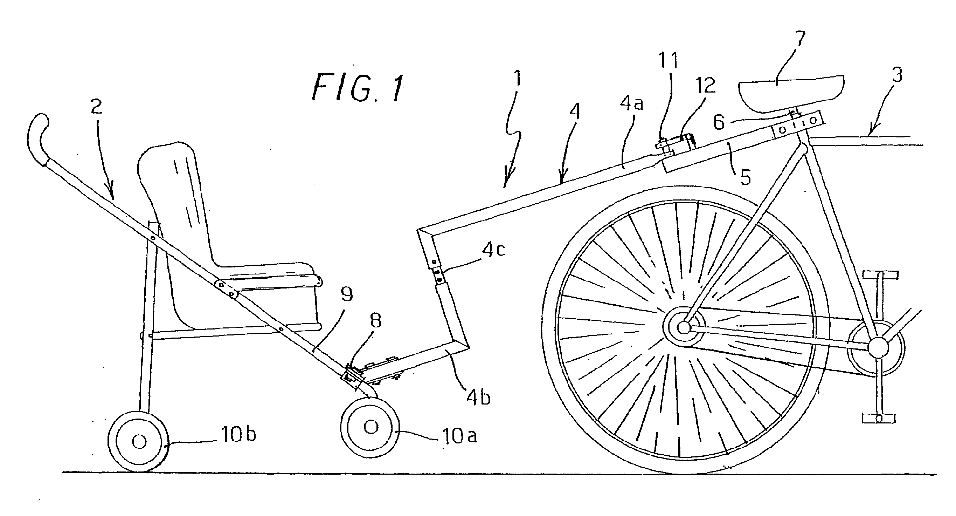

As shown in Figs. 1 to 3, device 1 according to the invention for pulling a stroller 2 by means of a bicycle 3 essentially comprises a bar 4 that is connected, at one end, to means 5 for its fastening to the bicycle frame, in particular to column 6 of saddle 7, and is equipped, at its other end, with means 8 for its fastening to the front part of the frame of stroller 2, for instance to tubes 9 bearing front wheels 10a.

Device 1 is so constructed that it keeps front wheels 10a lifted from ground, so that the stroller is pulled while resting on rear wheels 10b only, to ensure maximum manoeuvrability.

Bar 4 comprises a pair of L-shaped tubular members or portions 4a, 4b, connected so as to form a central portion of adjustable length, to allow adapting the device to bicycle frames with different heights and to cause negligible variations in the child's conditions. Thus, the ergonomic characteristics of the stroller are kept unchanged. For instance, the two members are connected by a telescopic section 4c.

At its front end, member 4a of bar 4 is inserted onto a pin 11 projecting vertically upwards from fastener 5. Thus bar 4 can rotate in a horizontal plane only (or in a plane slightly inclined with respect to ground, in the case shown in the drawing), but not in a vertical plane. The bar weight is therefore essentially borne by the fastener. At the region where bar 4 is connected to fastener 5, a spring safety device 12, for instance a snap-hook or the like, is provided, to prevent bar 4 from casually detaching from pin 11 because of jerks.

Also fastener 5 is a tubular member and it is equipped at its front end with jaws arranged to let through the saddle tube and to be clasped on said tube by means of bolts or screws 14.

The means for fastening rear member 4b of bar 4 to stroller 2 comprise an elongated plate 15 perpendicular to said rear member 4b. Plate 15 co-operates with a pair of fastening members 16 that are so shaped as to form a seat for a respective tube 9 of the stroller, and that can be tightened on that tube through bolts 17 or the like. A pair of connecting members 18 connect plate 15 to the end of rear portion 4b of bar 4. Members 18 are e.g. bolted at 19 and 20 to plate 15 and bar 4b, respectively.

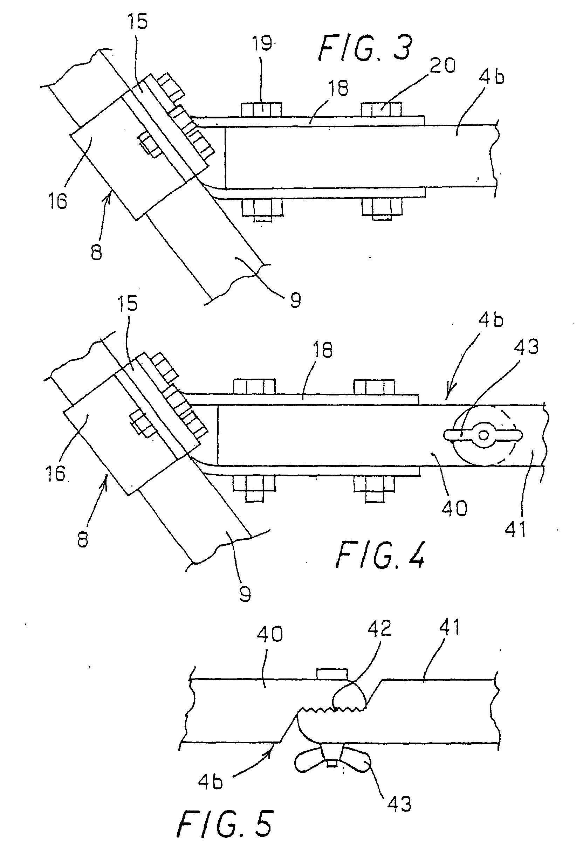

In the variant embodiment shown in Figs. 4 and 5, the end portion of rear member 4b, on the side of stroller 2, comprises two sections 40, 41 hinged to each other according to a horizontal axis to allow adjusting the distance of plate 15 from ground, to adapt the device to different strollers. In correspondence of the hinge, the co-operating surfaces of sections 40, 41 form e.g. a toothed coupling 42 that can be locked or unlocked by acting onto a screw 43.

The provision of toothed coupling 42 allows moreover using a non-telescopic bar 4, i.e. a bar lacking telescopic portion 4c.

Fastening means 8 could for instance comprise a tubular member equipped at its ends with a pair of jaws similar to jaws 13 in fastener 5. Moreover, such means could be joined to bar 4 by welded connecting members instead of bolted connecting members.

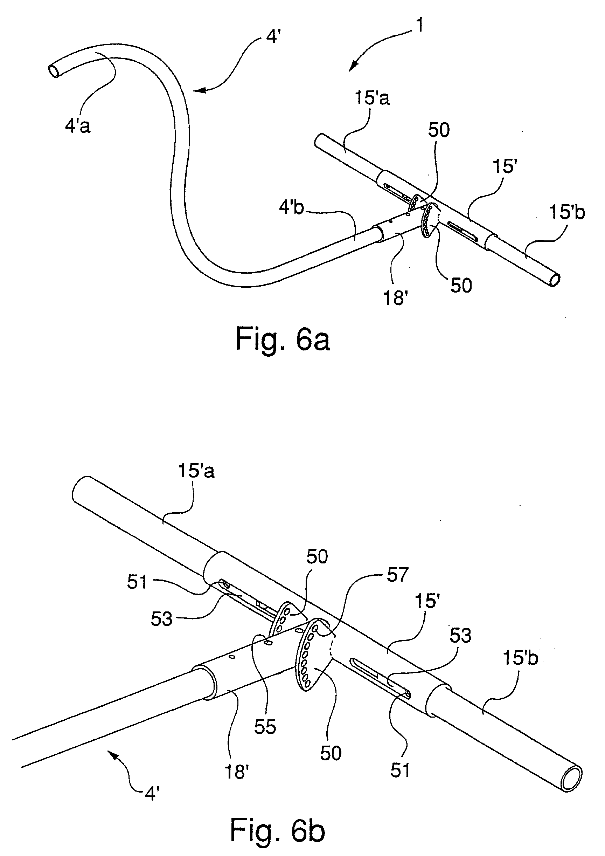

Referring now to Figs. 6a and 6b, a second variant of device 1 is shown, where bar 4' has a curvilinear, S-shaped profile, so as to define a front portion 4'a for fastening to the saddle tube in cycle 3 and a rear portion 4'b for fastening to the stroller.

In this variant, rear portion 4'b of bar 4' is secured to the stroller by means of an adjustable fastening system.

Said fastening system comprises a central tube 15' to which rear portion 4'b of said bar 4' is removably connected.

Removable connection of bar 4' to tube 15' is achieved by means of a pair of trapezoidal plates 50 radially welded in a central portion of said tube 15', so as to define between them a corresponding seat for a sleeve 18' into which the rear end of said bar 4' is inserted.

To adjust the distance between said bar 4' and tube 15', said sleeve 18' has a set of holes 55 for the fastening bolt of bar 4'.

To adjust the inclination of the stroller with respect to ground, plates 50 have sets of holes 57 along their outer edges for receiving the fastening bolt of sleeve 18'.

Two side tubes 15'a and 15'b are fitted into the opposite ends of said central tube 15' and they can slide over a certain distance within central tube 15' so that the width of the fastening system can be varied to be adapted to different strollers.

Once the desired width has been obtained, said side tubes 15'a and 15'b are fastened to central tube 15' through respective bolts engaging holes 51 provided in said side tubes 15'a and 15'b. A pair of longitudinal slots 53 are provided in the arms of said tube 15' to receive said fastening bolts.

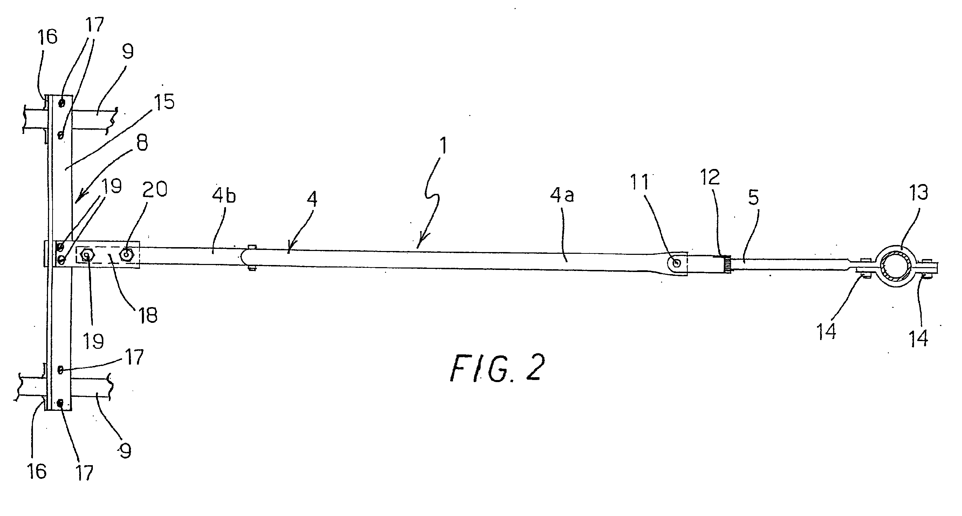

For fastening the device to the stroller, the free ends of side tubes 15'a and 15'b will be equipped with respective jaws, like those disclosed with reference to Fig. 2.

The proposed device allows carrying a child in such a manner that its movements cannot disturb the cyclist. Moreover, the advantage is obtained that the stroller is available once the desired destination has been reached. Furthermore, the device allows the child to be more comfortably arranged during the ride and also to sleep. Still further, the stroller can even become a useful loading plane for the everyday tasks (such as shopping of any kind and conveyance of the child's belongings), which will no longer affect dynamics and safety in cycle driving.

It is clear that the above description has been given only by way of non-limiting example and that changes and modifications are possible without departing from the scope of the invention.

## Claims

1. A device for pulling a stroller (2) by means of a bicycle (3), the device comprising a pulling bar (4; 4') that is equipped, at one end, with first means (5) for fastening the bar to the frame (6) of the bicycle (3), said means allowing rotation of said bar (4; 4') about an axis that is substantially vertical relative to ground, and is equipped, at the opposite end, with second means (8) for fastening said bar (4; 4') to the frame (9) of the stroller (2), near the front wheels (10a).

2. A device as claimed in claim 1, wherein said bar (4; 4') and said first and second means (5, 8) are so shaped that the stroller (2) can be pulled with its front wheels (10a) lifted from ground.

3. A device as claimed in claim 1 or 2, wherein said bar (4; 4') comprises L-shaped front and rear members (4a, 4b) connected to each other through a central portion (4c) of adjustable length, allowing adapting said bar (4; 4') to frames of bicycles (3) with different heights.

4. A device as claimed in claim 1, wherein said bar (4; 4') has a curvilinear, S-shaped profile.

5. A device as claimed in any preceding claim, wherein said first means comprise a substantially vertical pin (11), which is integral with the bicycle frame and onto which the front end of said bar (4) is hinged, and wherein a safety lock (12) is provided at the hinge region to prevent the bar (4) from becoming accidentally detached from said pin (11).

6. A device as claimed in any preceding claim, wherein said second means (8) comprise a central tube (15') to which the rear portion (4b, 4'b) of said bar (4; 4') is removably connected, said central tube being equipped at its ends with respective side tubes (15'a, 15'b) telescopically inserted into said central tube to adapt the length of said second fastening means to the stroller width.

7. A device as claimed in claim 6, wherein said side tubes (15'a, 15'b) are equipped at their ends with respective jaws (16) for fastening said side tubes to the stroller frame.

8. A device as claimed in claim 6 or 7, wherein the removable connection of said bar (4; 4') to said central tube is obtained by means of a pair of trapezoidal plates (50) radially welded to a central region of said tube (15') so as to define between them a corresponding seat for a sleeve (18') into which the rear end of said bar (4') is inserted.

9. A device as claimed in claim 8, wherein said plates (50) have sets of holes (57) along their outer edges for receiving the fastening bolt of said sleeve (18'), said holes allowing adjusting the stroller inclination with respect to ground.

10. A device as claimed in claim 8, wherein said sleeve (18') has a set of holes (55) along a generatrix for receiving the fastening bolt of said bar (4; 4'), to allow adjusting the distance between said bar (4; 4') and said central tube (15').

11. A device as claimed in claim 3, wherein said rear member (4b) of said bar (4; 4') comprises two portions (40, 41) hingedly connected according to a horizontal axis.

12. A device as claimed in claim 11, wherein said two portions (40, 41) of the rear member (4b) have, in correspondence of the hinge, co-operating surfaces forming a toothed coupling (42) associated with means (43) for blocking the coupling in any desired position.
